# EUROPEAN PATENT APPLICATION

(11) **EP 1 391 688 A1**
(43) Date of publication of application: **25.02.2004**
(21) Application number: 02447154.2
(22) Date of filing: 14.08.2002
(51) Int. Cl.: G01B 11/03, G01B 11/25, B25J 9/16

(54) **Optical probe with laser scanner for generating crossed lines**

(71) Applicant: Metris N.V., 3001 Leuven (BE)
(72) Inventor: Van Coppenolle, Bart, 3210 Linden (BE); De Jonge, Lieven, 3090 Overijse (BE)
(74) Representative: Brants, Johan Philippe Emile

(57) **Abstract**

The present invention relates to an optical probe for use on a localizer, said optical probe consisting of
- one or more laser diodes projecting through optics two or more laser lines having an angle of at least 10° between every two lines,
- two or more optics with one or more optical paths for accepting the returning laser light coming from said projection of said laser lines on an object, and
- one or more analogue or digital cameras receiving said returning light through said optical paths,
whereby said optical probe is connected to said localizer, said localizer consisting of one or more rotational and/or one or more translational axes for positioning and orientating said optical probe in a one-, two- or three-dimensional working volume. The present invention also relates to a method for scanning an object using an optical probe according to the invention connected to a localizer.

## Description

### Field of the invention

The present invention relates to the field of laser scanning technology. In a first aspect the present invention relates to an optical probe for use on a localizer. In a second aspect, the present invention relates to a method for scanning an object using the optical probe according to the invention connected to a localizer.

### Background of the invention

For optical measuring of the position and the dimensions of features in industrial objects like holes, slots, edges or gap and flush, different solutions exist. On the one hand there are dedicated measuring machines like profile projectors. However, these machines lack flexibility and measuring speed. On the other hand there are machines, generally defined as localizers, capable of positioning and orientating an optical probe in three-dimensional space. The localizer records the position and orientation of the probe with a position-dependent accuracy. These localizers can be coordinate measuring machines, articulated arms, robots or machining centers. For mounting on these localizers different optical probes exist such as video probes, laser scanners or probes with fringes or pattern projection. All these probes use analogue or digital camera's, mostly CCD-camera, with one-dimensional, i.e. line, or two-dimensional, i.e. matrix arrays, at the end of the optics for receiving the light returning from the object being measured.

Video probes use back and/or front lighting and image processing to measure a feature of an object. These probes are basically two-dimensional probes; the third dimension is derived from the auto focus optics, if available. They are quite inaccurate and are not suited for highly curved three-dimensional parts.

Probes mounted on a localizer and projecting fringes or black-white stripe pattern for moiré analysis are inaccurate. When they are used for measuring features in objects, they are slow and have to be reoriented several times by the localizer in order to measure the feature properly. The best accuracy is reached when the lines in the projection are orthogonal to the edges in the object. This rule implies that a hole or circle has at least two orthogonal directions for projecting the stripes. So apart from a possible translational movement of the scanner to cover the complete circle, a 90° rotational movement is needed to have two orthogonal stripe projections. For localizers with translational axes only, this is done by adding one or two rotary axes geometrically just before the scanner. These rotary axes can be indexed or continuous.

Laser scanners project a laser point or line on the object and one or more CCD-camera's receive the returning light. With respect to the laser scanner itself, this laser point can be stationary (point laser scanner), have a linear (line laser scanner) or a circular (circle laser scanner) movement. Other line laser scanners generate a laser line on the object without any moving or rotating parts in the probe itself, mostly by using a cylindrical lens in the laser optics. Most of these scanners are used for digitizing full objects and are accurate. Some of the laser scanners are equipped with two or more optical paths for the light returning from the object being measured. This reduces the chance that during scanning the line of sight between the receiving optics and the part of the object that is highlighted by the laser is blocked by a part of the object itself. All receiving and emitting optical paths are positioned on one line or in one plane.

If a line laser scanner is used for measuring features in objects, ideally the laser line should be orthogonal to the feature itself. This implicates that only translational movements of the line laser scanner made by the localizer in general is not sufficient to accurately measure the feature. Also rotational movements of the scanner are necessary. For example a feature with a curved edge will generate translational and rotational movements of the scanner to keep the laser line orthogonal to the edge during the measurement. For localizers with translational axes only, this is done by adding one or two rotary indexed or continuous axes geometrically just before the laser scanner. *However, the approach comprising translational and rotational movements of the laser scanner is complicated.*

*Therefore, there remains a need in the prior art for an easier and improved laser scanner. The present invention provides a laser scanner, which overcomes the difficulties and drawbacks of the presently known laser scanners.*

### Summary of the invention

In a first aspect the present invention relates to an optical probe for use on a localizer, said optical probe consisting of
- one or more laser diodes projecting through optics two or more laser lines having an angle of at least 10° between every two lines,
- two or more optics with one or more optical paths for accepting the returning laser light coming from said projection of said laser lines on an object, and
- one or more analogue or digital cameras receiving said returning light through said optical paths,
whereby said optical probe is connected to said localizer, said localizer consisting of one or more rotational and/or one or more translational axes for positioning and orientating said optical probe in a one-, two- or three-dimensional working volume.

When using the optical probe on a localizer for scanning purposes, according to the invention, the present invention provides an easier approach for performing laser scanning. Advantageously, when using the optical probe according to this invention for measuring features in industrial objects, the problem of rotating the laser scanner to orientate it orthogonally to the feature is avoided. This is achieved by using an optical probe, which enables the projection of the two or more crossing laser lines. In addition, the projection of the two or more crossing laser lines can be performed simultaneously. This technique enables every direction, orthogonally to the feature at that position, to be decomposed in the different directions of the laser lines of the cross laser scanner. In the novel approach according to the invention, the rotary movements of the optical probe and as a consequence the additional rotary axes of the localizers are not necessary. In this way also localizers with only translational axes, like CMMs, can be used for measuring features.

In a second aspect the present invention relates to a method for scanning an object using an optical probe according to the invention connected to a localizer.

Other advantages and applications of the present invention will become clear form the following detailed description and accompanying drawing.

### Description of the invention

The invention relates to a cross laser scanner, i.e. a laser scanner projecting simultaneously two or more crossing lines (6) on an object (7) such that the returning light from each line (8) is acquired by a separate set of optics (1-4), consisting in one or more optical paths. The projection of these crossing lines can be simultaneously or quasi simultaneously, i.e one crossing line after another. From an abstract point of view, this cross laser scanner is a physical merging of two or more line laser scanners in such a way that all laser lines cross each other. It is not necessary for all laser lines to cross exactly in one point. Each laser line with its returning optics can be calibrated separately.

As used herein the term "cross laser scanner" relates to a laser scanner provided with the optical probe according to the invention.

According to a first embodiment the optical probe according to the invention for use on a localizer consists of
- one or more laser diodes projecting through optics two or more laser lines having an angle of at least 10° between every two lines,
- two or more optics with one or more optical paths for accepting the returning laser light coming from said projection of said laser lines on an object, and
- one or more analogue or digital cameras receiving said returning light through said optical paths,
whereby said optical probe is connected to said localizer, said localizer consisting of one or more rotational and/or one or more translational axes for positioning and orientating said optical probe in a one-, two- or three-dimensional working volume.

The optical probe according to the invention can be used for measuring features in industrial objects. The term "features" as used herein refers to surfaces such as holes, slots, edges or gap and flush. As mentioned above, use of the optical probe according to the invention avoids the need for rotating the laser scanner orthogonally to the feature. Also, since a rotary movement of the optical probe is not required, additional rotary axes of the localizers are not necessary and localizers having rotational and/or translational axes for positioning and orientating said optical probe can be used.

Another major improvement of the optical probe according to the invention relates to a major reduction in measurement time. With a cross laser scanner a feature can be measured in one sweep, while a conventional line scanner will have to cover the feature two times; doing it the second time after rotating the optical probe.

The projection of the crossing lines by the laser diodes of the optical probe can be simultaneously or quasi simultaneously, i.e one crossing line after another. According to a preferred embodiment, the present invention relates to an optical probe, wherein two laser diodes project simultaneously through optics two laser lines that cross each other orthogonally.

Another advantage of the present invention is the use of the line laser scanning principle, that is accurate, not only for digitizing but also for feature measurement. In another embodiment, the present invention relates to an optical probe, wherein said cameras receiving the returning light are positioned in the probe according to the Schweimpflug principle. As known by one of skill in the art, the Schweimpflug principle provides guidance on how a camera lens should be tilted when focusing upon a plane that is not parallel to the film, as explained in the GB patent No 1196 and Harold M (1996), Scheimpflug's Patent, Merklinger, Photo Techniques. The Scheimpflug principle states that the object (film) plane, the subject plane (plane of sharp focus), and lens plane (the plane through the optical center and perpendicular to the lens axis) must converge along a single line.

In another preferred embodiment, the present invention relates to an optical probe, wherein one camera is used.

In another embodiment of the present invention, the receiving optics for each laser line consists of two different optical paths. The optics are positioned as such in the probe that they are opposite to each other with respect to the laser line in question. In this way the chance that a part of the object blocks the line of sight between the projected laser line on the object and the receiving optics is reduced with 50%.

In another embodiment the invention relates to a method for scanning an object using an optical probe according to the invention, which is connected to a localizer, said method, comprises the steps of:
- positioning and orientating the optical probe by said localizer in a one-, two- or three-dimensional working volume,
- projecting two or more laser lines having an angle of at least 10° between every two lines on an object, said projection being performed by one or more laser diodes through optics,
- accepting the laser light returning from said projection of said laser lines on said object by two or more optics with one or more optical paths, and
- receiving said returning light through said optical paths by one or more analogue or digital cameras.

The invention provides an easy and time-effective scanning method by using the optical probe according to the invention.

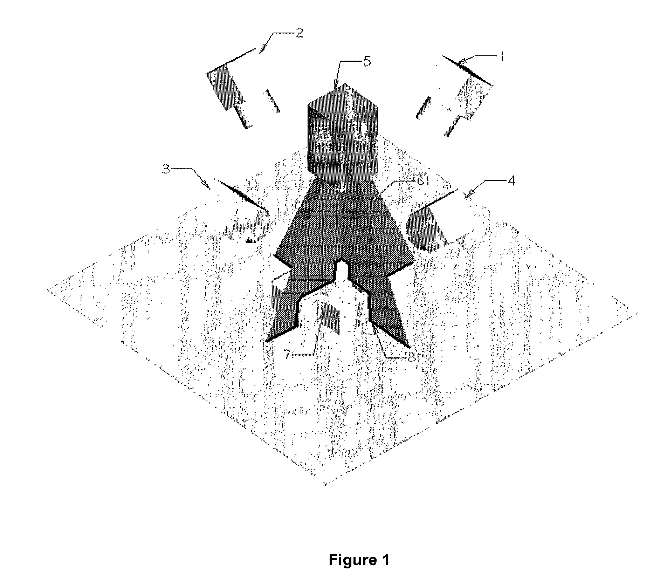

## Claims

1. An optical probe for use on a localizer, said optical probe consisting of
- one or more laser diodes projecting through optics two or more laser lines having an angle of at least 10° between every two lines,
- two or more optics with one or more optical paths for accepting the returning laser light coming from said projection of said laser lines on an object, and
- one or more analogue or digital cameras receiving said returning light through said optical paths,
whereby said optical probe is connected to said localizer, said localizer consisting of one or more rotational and/or one or more translational axes for positioning and orientating said optical probe in a one-, two- or three-dimensional working volume.

2. An optical probe according to claim 1, wherein two laser diodes project simultaneously through optics two laser lines that cross each other orthogonally.

3. An optical probe according to claim 1 or 2 wherein said cameras receiving said returning light are positioned in said probe according to the Schweimpflug principle.

4. An optical probe according to any of claims 1 to 3, wherein one camera is used.

5. An optical probe according to any of claims 1 to 4, wherein each laser line has two optical paths for the returning light and said optical paths are positioned opposite to each other with respect to said laser line.

6. Method for scanning an object using an optical probe according to any of claims 1 to 5 connected to a localizer comprising the steps of:
- positioning and orientating said optical probe by said localizer in a one-, two- or three-dimensional working volume,
- projecting two or more laser lines having an angle of at least 10° between every two lines on an object, said projection being performed by one or more laser diodes through optics,
- accepting the laser light returning from said projection of said laser lines on said object by two or more optics with one or more optical paths, and
- receiving said returning light through said optical paths by one or more analogue or digital cameras.
